# EUROPÄISCHE PATENTSCHRIFT

(11) **EP 0 787 914 B1**
(45) Veröffentlichungstag und Bekanntmachung des Hinweises auf die Patenterteilung: **26.09.2001**
(21) Anmeldenummer: 96119126.9
(22) Anmeldetag: 29.11.1996
(51) Int. Cl.: F16C 33/08, F16C 17/08

(54) **Gleitlageranordnung mit einem buchsenförmigen Gleitlagerelement**
Bearing arrangement with a bush-shaped sliding element
Arrangement de palier avec élément de glissement en forme de coussinet

(30) Priorität: 03.02.1996 DE 19603929
(43) Veröffentlichungstag der Anmeldung: 06.08.1997
(73) Patentinhaber: KS Gleitlager GmbH, 68789 St. Leon-Rot (DE)
(72) Erfinder: Bickle, Wolfgang, 68799 Reilingen (DE); Storch, Thomas, 68782 Brühl (DE)
(74) Vertreter: Dreiss, Fuhlendorf, Steimle & Becker

(56) Entgegenhaltungen:
- DE-A- 1 422 629
- DE-A- 2 747 382
- DE-A- 3 347 096
- DE-A- 4 243 781
- FR-A- 2 278 985
- GB-A- 2 079 872
- GB-A- 2 207 961

## Beschreibung

Die Erfindung betrifft eine Gleitlageranordnung aus einem in eine Gehäusedurchgangsöffnung eingesetzten Gleitlagerelement und einer darin gelagerten Welle, einer Achse, eines Zapfens oder eines sonstigen umdrehbaren Bauteils.

Zur Lagerung von Wellen und Achsen werden Gleitlagerelemente in Form von Buchsen oder Bundbuchsen oder auch in Form von Lagerschalen, die zur Bildung einer Lagerbuchse aneinandergesetzt werden, verwendet. Bei buchsenförmigen Gleitlagerelementen tritt das Problem auf, daß abrasiv wirkende Stoffe, wie Schmutz, Abrieb oder dergleichen, von außen zur Lagerstelle gelangen und sich dort schadhaft auswirken können. Desweiteren tritt das Problem auf, daß unerwünschte Stoffe, wie zum Beispiel Blei, Fett, Öl, aus der Lagerstelle nach außen gelangen. Wenn ein buchsenförmiges Gleitlagerelement in einer Durchgangsöffnung eines Gehäuses angeordnet ist, wurde der vorstehenden Problematik bislang dadurch begegnet, daß ein zusätzliches Dichtungselement in die Durchgangsöffnung eingesetzt oder eingepreßt wurde, um die Lagerstelle abzudichten. Die beschriebene Vorgehensweise ist zeitaufwendig und mit hohen Montagekosten sowie mit Kosten für das zusätzliche Dichtelement verbunden. Ein weiterer Nachteil ist darin zu sehen, daß aufgrund der für einen sicheren Preßsitz des zusätzlichen Dichtelements in der Durchgangsöffnung erforderliche axiale Bauraum entweder auf Kosten der Buchsenbreite des Gleitlagerelements geht oder die Gehäusewand entsprechend stärker ausgebildet werden muß.

Aus der GB-A-2 079 872 ist eine Gleitlageranordnung bekannt mit einem topfförmigen Gleitlagerelement, welches in eine Durchgangsöffnung eingesetzt und durch einen Sprengring in der Durchgangsöffnung gehalten ist.

Alternativ ist aus der FR-A-2 278 985 bekannt, das Gleitlagerelement mittels eines Flansches an der Buchse in einem Gehäuse festzuhalten.

Der vorliegenden Erfindung liegt die Aufgabe zugrunde, eine Gleitlageranordnung der eingangs beschriebenen Art im Hinblick auf die vorstehend geschilderten Nachteile zu verbessern.

Diese Aufgabe wird durch eine Gleitlageranordnung mit den Merkmalen des Anspruchs 1 gelöst.
Die mit der Gegenlauffläche der Welle oder Achse zusammenwirkende Gleitfläche des Gleitlagerelements ist dann gegen die von der Einsteckseite für die Welle abgewandte Seite durch den Bodenbereich abgedichtet. Hierbei ist es jedoch denkbar, daß der Bodenbereich ein Schmierloch aufweist, durch welches der Lagerstelle Schmiermittel zugeführt werden kann, sofern dies im Einzelfall gewünscht wird.

Obschon die Ausgestaltung des Bodenbereichs des Gleitlagerelements für dessen bestimmungsgemäße Funktion nicht zwingend vorgeschrieben ist, sofern die wellenabgewandte Seite von dem Bodenbereich begrenzt ist, erweist es sich als platzsparend und daher vorteilhaft, wenn der Bodenbereich im wesentlichen senkrecht zur Buchsenlängsachse verläuft.

Bei dem erfindungsgemäßen Gleitlagerelement könnte es sich beispielsweise um eine gedrehte oder gerollte Buchse handeln, der in beliebiger Weise ein Bodenbereich angeformt ist. Bei gedrehten Buchsen besteht auch die Möglichkeit, das Buchseninnere durch Aufbohren eines stabförmigen Rohlings unter Belassung des Bodenbereichs herzustellen. Bei einer besonders bevorzugten Ausführungsform der Erfindung ist das Gleitlagerelement aber ein Tiefziehteil. Zur Herstellung des Gleitlagerelements wird hierfür eine Platine aus einer Flachmaterialbahn gestanzt und diese vorzugsweise in mehreren Zügen tiefgezogen, wobei die topf-, napf- oder hutähnliche Form gebildet wird.

Das Gleitlagerelement kann aus einem Massiv- bzw. Monowerkstoff bestehen, es kann aber auch verbundartig aufgebaut sein. Im letzteren Fall kann das Gleitlagerelement einen metallischen Träger mit einer darauf aufgebrachten Gleitschicht umfassen. Es kann aber auch einen Folienwerkstoff, z.B. in Form eines mit Kunststoff imprägnierten Gewebes oder Gewirkes umfassen.

Das Gleitlagerelement ist von der von der Welle abgewandten Seite der Durchgangsöffnung in diese eingepreßt, so daß bei Einhaltung der üblichen Richtwerte für die Gestaltung der Anschlußteile die entstehende Reibungswärme an das Gehäuse und auch an die Welle abgeführt werden kann.

Erfindungsgemäss weist die Gehäusedurchgangsöffnung eine abgesetzte Bohrung zur definierten Aufnahme des Gleitlagerelements auf.

Weitere Merkmale, Einzelheiten und Vorteile der Erfindung ergeben sich aus den beigefügten Schutzansprüchen sowie der zeichnerischen Darstellung und nachfolgenden Beschreibung zweier bevorzugter Ausführungsformen der Erfindung. Es zeigt:

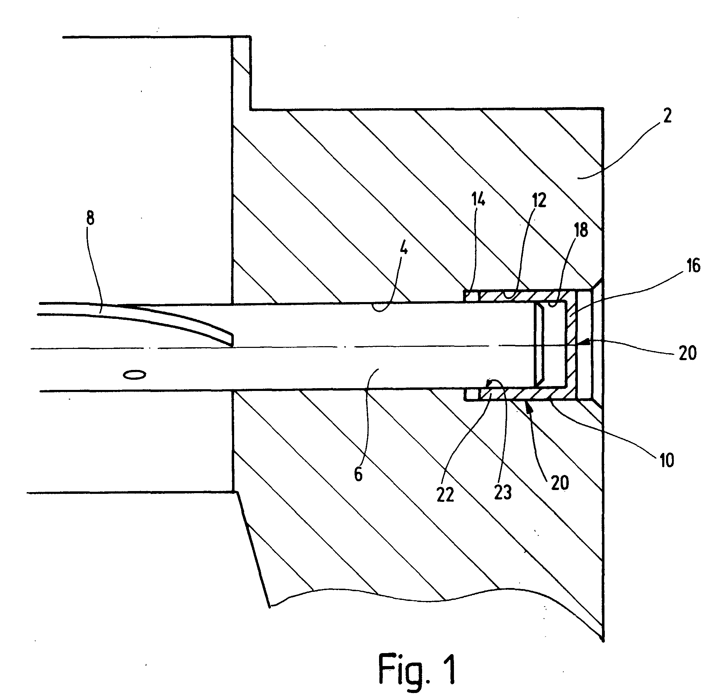

- Figur 1: eine erfindungsgemäße Gleitlageranordnung.

Die Figur zeigt eine abschnittsweise dargestellte Gehäusewand 2 eines Kfz-Vergasers. In der Gehäusewand 2 ist eine Durchgangsbohrung 4 ausgebildet, in welcher ein Drosselklappenstutzen 6, der eine mit dem Bezugszeichen 8 angedeutete Drosselklappe trägt, umdrehbar gelagert ist. Hierfür ist ein im Querschnitt topfförmig ausgebildetes Gleitlagerelement 10 vorgesehen, das von der dem Stutzen 6 abgewandten Seite der Bohrung 4 in diese eingepreßt ist. Hierfür weist die Bohrung 4 eine abgesetzte Erweiterung 12 auf, die einen Anschlag 14 für das Gleitlagerelement 10 bildet. Das Gleitlagerelement 10 umfaßt einen metallischen Träger 16 mit einer Gleitschicht 18. Bei dem aus Träger 16 und Gleitschicht 18 gebildeten Gleitlagermaterial kann es sich beispielsweise um das von der Anmelderin unter dem Handelsnamen "Permaglide" hergestellten und vertriebenen Werkstoff handeln, ohne daß die Erfindung jedoch hierauf beschränkt ist.

Zur Herstellung des topfförmigen Gleitlagerelements wird ein in ansich bekannter Weise herzustellendes Band zur Gewinnung einer Platine gestanzt. Die Platine wird dann in vorzugsweise mehreren Zügen mit verschiedenen im Durchmesser abnehmenden Tiefziehwerkzeugen tief gezogen bis die dargestellte topfförmige Gestalt mit einem Bodenbereich 20 und einem zylindrischen Mantelabschnitt 22 gebildet ist. Die inneren Mantelflächen 23 bilden die Gleitflächen und übernehmen die Lagerungsfunktion, während der Bodenbereich 20 des Gleitlagerelements 10 die Abdichtung der Lagerstelle bewirkt.

## Patentansprüche

1. Gleitlageranordnung aus einem in eine Gehäusedurchgangsöffnung (4) eingesetzten topfförmigen Gleitlagerelement (10) und einer darin gelagerten Welle (6), so daß die von der Einsteckseite für die Welle (6, 41), den Zapfen oder dergleichen abgewandte Seite des Gleitlagerelements von einem geschlossenen Bodenbereich (20, 38) begrenzt ist, **dadurch gekennzeichnet, dass** die Gehäusedurchgangsöffnung (4) eine abgesetzte Bohrung (12) zur Aufnahme des Gleitlagerelements (10) und zur Bildung eines Anschlags (14) für das Gleitlagerelement (10) aufweist und das Gleitlagerelement (10) von der von der Welle (6) abgewandten Seite der Gehäusedurchgangsöffnung (4) dichtend in diese eingepreßt ist.

2. Gleitlageranordnung nach Anspruch 1, **dadurch gekennzeichnet, daß** das Gleitlagerelement (10) ein Tiefziehteil ist.

3. Gleitlageranordnung nach Anspruch 1 oder 2, **dadurch gekennzeichnet, daß** das Gleitlagerelement (10) aus einem Massiv- oder Monowerkstoff besteht.

4. Gleitlageranordnung nach einem der vorhergehenden Ansprüche, **dadurch gekennzeichnet, daß** das Gleitlagerelement (10) einen metallischen Träger (16) mit einer darauf aufgebrachten Gleitschicht (18, 40) umfaßt.

5. Gleitlageranordnung nach Anspruch 4, **dadurch gekennzeichnet, daß** der metallische Träger (16) Stahl, Bronze, Messing oder Aluminium umfaßt.

6. Gleitlageranordnung nach Anspruch 4 oder 5, **dadurch gekennzeichnet, daß** die Gleitschicht (18, 40) ein Kunststoffmaterial, Aluminium, Messing oder Bronze umfaßt.

7. Gleitlageranordnung nach Anspruch 1 oder 2, **dadurch gekennzeichnet, daß** das Gleitlagerelement (10) einen Folienwerkstoff umfaßt.

8. Gleitlageranordnung nach einem der vorhergehenden Ansprüche, **dadurch gekennzeichnet, daß** das Gleitlagerelement (10) derart in die Durchgangsöffnung (4) eingepreßt ist, daß seine nach außen weisende Oberfläche des Bodenbereichs (20) innerhalb der Durchgangsöffnung (4) vom Öffnungsrand abgesetzt angeordnet ist.

## Claims

1. Slide bearing arrangement made of a pot-shaped slide bearing element (10) inserted into a housing through-aperture (4) and a shaft (6) mounted therein, so the side of the slide bearing element remote from the insertion side for the shaft (6, 41), the journal or the like is limited by a closed base region (20, 38), **characterised in that** the housing through-aperture (4) has an off-set hole (12) for receiving the slide bearing element (10) and for forming a stop (14) for the slide bearing element (10) and the slide bearing element (10) is pressed into the housing through-aperture (4), in a sealing manner, from the side thereof remote from the shaft (6).

2. Slide bearing arrangement according to claim 1, **characterised in that** the slide bearing element (10) is a deep-drawing part.

3. Slide bearing arrangement according to claim 1 or 2, **characterised in that** the slide bearing element (10) consists of a solid or mono-material.

4. Slide bearing arrangement according to any one of the preceding claims, **characterised in that** the slide bearing element (10) comprises a metallic support (16) with a sliding layer (18, 14) applied thereto.

5. Slide bearing arrangement according to claim 4, **characterised in that** the metallic support (16) comprises steel, bronze, brass or aluminium.

6. Slide bearing arrangement according to claim 4 or 5, **characterised in that** the sliding layer (18, 40) comprises a plastics material, aluminium, brass or bronze.

7. Slide bearing arrangement according to claim 1 or 2, **characterised in that** the slide bearing element (10) comprises a foil material.

8. Slide bearing arrangement according to any one of the preceding claims, **characterised in that** the slide bearing element (10) is pressed into the through-aperture (4) in such a way that its surface of the base region (20) facing outwards is arranged inside the through-aperture (4) offset from the aperture edge.

## Revendications

1. Arrangement de palier comprenant un élément de glissement (10) en forme de pot inséré dans un orifice de passage (4) ménagé dans le boîtier et un arbre (6) logé dans l'élément de glissement de sorte que le côté de l'élément de glissement qui est opposé au côté d'insertion de l'arbre (6, 41), du tourillon ou élément similaire soit délimité par une zone de fond fermée (20, 38), **caractérisé en ce que** l'orifice de passage (4) comprend un dégagement (12) destiné à recevoir l'élément de glissement (10) et à constituer une butée (14) pour l'élément de glissement (10) et en ce que l'élément de glissement (10) est emmanché à force dans l'orifice de passage (4) depuis le côté opposé à l'arbre (6) de façon à y assurer l'étanchéité.

2. Arrangement de palier selon la revendication 1, **caractérisé en ce que** l'élément de glissement (10) est fabriqué par emboutissage.

3. Arrangement de palier selon la revendication 1 ou 2, **caractérisé en ce que** l'élément de glissement (10) est une pièce massive ou de type mono-matière.

4. Arrangement de palier selon l'une quelconque des revendications précédentes, **caractérisé en ce que** l'élément de glissement (10) comprend un support métallique (16) revêtu d'une couche de glissement (18, 40).

5. Arrangement de palier selon la revendication 4, **caractérisé en ce que** le support métallique (16) est à base d'acier, bronze, laiton ou aluminium.

6. Arrangement de palier selon la revendication 4 ou 5, **caractérisé en ce que** la couche de glissement (18, 40) est à base de matière plastique, aluminium, laiton ou bronze.

7. Arrangement de palier selon la revendication 1 ou 2, **caractérisé en ce que** l'élément de glissement (10) comprend un matériau en forme de feuille.

8. Arrangement de palier selon l'une quelconque des revendications précédentes, **caractérisé en ce que** l'élément de glissement (10) est emmanché à force dans l'orifice de passage (4) de sorte que la face de sa zone de fond (20) orientée vers l'extérieur soit décalée vers l'intérieur de l'orifice de passage (4) par rapport au bord de ce dernier.
